# EUROPEAN PATENT APPLICATION

(11) **EP 3 733 385 A1**
(43) Date of publication of application: **04.11.2020**
(21) Application number: 19747065.1
(22) Date of filing: 31.01.2019
(51) Int. Cl.: B29C 70/10, B29C 43/02, C08J 5/04

(54) **METHOD FOR MOLDING COMPOSITE MATERIAL, COMPOSITE MATERIAL, PRESSING HEAD, AND DEVICE FOR MOLDING COMPOSITE MATERIAL**

(30) Priority: 31.01.2018 JP 2018015619
(71) Applicant: MITSUBISHI HEAVY INDUSTRIES, LTD., Chiyoda-ku Tokyo 100-8332 (JP); Akita University, Akita-shi Akita 010-8502 (JP)
(72) Inventor: KAMIHARA, Nobuyuki, Tokyo 100-8332 (JP); TAKAGI, Kiyoka, Tokyo 100-8332 (JP); ABE, Toshio, Nagoya-shi, Aichi 453-0862 (JP); MURAOKA, Mikio, Akita-shi, Akita 010-8502 (JP); TAKAYANAGI, Toshiyuki, Tokyo 100-8332 (JP); ISHIKAWA, Naomoto, Tokyo 100-8332 (JP); NISHIMURA, Wataru, Tokyo 100-8332 (JP); KAMO, Sota, Tokyo 100-8332 (JP); DENGO, Tomoharu, Nagoya-shi, Aichi 453-0862 (JP); ISHIDA, Takashi, Nagoya-shi, Aichi 453-0862 (JP); YOSHIDA, Yukihiro, Akita-shi, Akita 010-8502 (JP)
(74) Representative: Henkel & Partner mbB
(86) International application number: PCT/JP2019/003459
(87) International publication number: WO 2019/151426

(57) **Abstract**

Provided are a method for molding a composite material, whereby the occurrence of temperature unevenness in the composite material during heating is reduced, a composite material, a pressing head, and a device for molding a composite material. The method for molding a composite material has an electroconductive wire-shaped material arranging step and a magnetic field application step. The electroconductive wire-shaped material arranging step comprises arranging, in an unreacted composite material 10 having reinforcing fibers 12, a plurality of electroconductive wire-shaped materials 16 at an interval wider than the interval between the reinforcing fibers 12 along a direction intersecting with the reinforcing fibers 12 in the plane in which the reinforcing fibers 12 are aligned. The magnetic field application step comprises applying a magnetic field 42 in a direction intersecting with the plane in which the reinforcing fibers 12 are aligned.

## Description

### Field

The present invention relates to a method for molding a composite material, a composite material, a pressing head, and a device for molding a composite material.

### Background

As light materials having high strength, a composite material in which reinforcing fibers are impregnated with a resin has been known. The composite material is used for aircraft, automobiles, and ships. As a method for manufacturing the composite material, a method has been known in which sheets of composite materials including reinforcing fibers impregnated with a resin are laminated and the laminated sheet is heated by using electromagnetic waves in the pressed state (see Patent Literature 1).

### Citation List

### Patent Literature

Patent Literature 1: Japanese Patent Application Laid-open No. 2015-131430

### Summary

### Technical Problem

Composite material has conductivity in portions of reinforcing fibers. Thus, the electric conductivity of the composite material is low except for a particular direction. Accordingly, in the case where the magnetic field is used to heat the composite material instead of electromagnetic waves in the method in Patent Literature 1, the electric conductivity of the composite material is low except for a particular direction, even when the magnetic field is applied to the entire composite material, there is a problem in that sufficient eddy current is not induced inside the composite material depending on regions of the composite material, and hence a region where the composite material is not sufficiently heated occurs and temperature unevenness occurs in the composite material during heating. As a result, a composite material obtained by using the magnetic field instead of electromagnetic waves in the method in Patent Literature 1 and heating the composite material to cause the resin to react has a problem in that strength unevenness occurs and the quality is not high.

The present invention has been made in view of the above, and it is an object thereof to provide a method for molding a composite material, a composite material, a pressing head, and a device for molding a composite material, which reduce the occurrence of temperature unevenness in a composite material during heating.

### Solution to Problem

To solve the problems described above and achieve the object, a method for molding a composite material is a method for molding a composite material including reinforcing fibers, and includes a conductive wire-shaped material arrangement step of arranging, in pre-reaction composite material, a plurality of conductive wire-shaped materials along a direction intersecting the reinforcing fibers with intervals wider than intervals of the reinforcing fibers in a plane on which the reinforcing fibers are arranged; and a magnetic field application step of applying a magnetic field in a direction intersecting the plane on which the reinforcing fibers are arranged.

With this configuration, a conductive loop is formed by the reinforcing fibers and the conductive wire-shaped materials, and hence sufficient eddy current is induced inside the composite material in response to the application of the magnetic field irrespective of regions of the composite material. Thus, the occurrence of temperature unevenness in the composite material during heating can be reduced. Consequently, this configuration can reduce the occurrence of strength unevenness in a composite material obtained by causing a resin to react, and can obtain a high quality composite material.

In this configuration, it is preferable that intervals of the conductive wire-shaped materials at peripheral regions of the composite material are larger than intervals of the conductive wire-shaped materials at a center region of the composite material. With this configuration, sufficient eddy current is induced inside the composite material particularly in the center region of the composite material, and hence the occurrence of temperature unevenness in the composite material during heating can be further reduced.

In these configurations, it is preferable that the conductive wire-shaped material arrangement step includes interweaving the conductive wire-shaped materials into the composite material. With this configuration, the conductive loop is more reliably formed inside the composite material. Thus, sufficient eddy current is more reliably induced inside the composite material in response to the application of the magnetic field, and hence the occurrence of temperature unevenness in the composite material during heating can be further reduced.

Alternatively, in these configurations, it is preferable that the conductive wire-shaped material arrangement step includes pressing the composite material by a pressing head to which the conductive wire-shaped materials are provided on a side to face the composite material. With this configuration, even when conductive wire-shaped materials are not interwoven inside the composite material, a conductive loop is formed inside the composite material. Thus, sufficient eddy current is induced inside the composite material in response to the application of the magnetic field, and hence the occurrence of temperature unevenness in the composite material during heating can be reduced.

Alternatively, in these configurations, it is preferable that the conductive wire-shaped material arrangement step includes pressing the composite material by an electroconductive roller served as the conductive wire-shaped material, and conveying the composite material along a direction in which the reinforcing fibers extend. With this configuration, even when conductive wire-shaped materials are not interwoven into the composite material, a conductive loop is formed inside the composite material through the electroconductive roller. Thus, sufficient eddy current is induced inside the composite material in response to the application of the magnetic field, and hence the occurrence of temperature unevenness in the composite material during heating can be reduced. Furthermore, the composite material is conveyed while being pressed by the electroconductive roller. Thus, a pressed region in the composite material and a region in the composite material in which the conductive loop is formed can be moved, and hence elongated composite materials in which conductive wire-shaped materials are not interwoven can be sequentially formed as appropriate.

In these configurations, it is preferable that the composite material is a commingled material in which the reinforcing fibers and a resin are interwoven in a knitted manner. With this configuration, a conductive loop is formed inside a commingled material in which a resin is interwoven in reinforcing fibers. Thus, sufficient eddy current is induced inside the commingled material in response to the application of the magnetic field, and hence the occurrence of temperature unevenness in the commingled material during heating can be reduced.

To solve the problems described above and achieve the object, a composite material extending planarly includes reinforcing fibers; a resin impregnated in the reinforcing fibers; and a plurality of conductive wire-shaped materials disposed in a plane on which the reinforcing fibers are arranged along a direction intersecting the reinforcing fibers, with intervals wider than intervals of the reinforcing fibers.

With this configuration, a conductive loop is formed by the reinforcing fibers and the conductive wire-shaped materials. Thus, sufficient eddy current is induced inside the composite material in response to the application of the magnetic field irrespective of regions of the composite material, and hence the occurrence of temperature unevenness in the composite material during heating can be reduced. Consequently, this configuration can reduce the occurrence of strength unevenness in a composite material obtained by causing a resin to react, and can obtain a high quality composite material.

To solve the problems described above and achieve the object, a composite material extending planarly includes reinforcing fibers; a resin interwoven in a knitted manner together with the reinforcing fibers; and a plurality of conductive wire-shaped materials disposed in a plane on which the reinforcing fibers are arranged along a direction intersecting the reinforcing fibers, with intervals wider than intervals of the reinforcing fibers.

With this configuration, a conductive loop by the reinforcing fibers and the conductive wire-shaped materials is formed inside a commingled material in which a resin is interwoven in reinforcing fiber. Thus, sufficient eddy current is induced inside the commingled material in response to the application of the magnetic field irrespective of regions of the commingled material, and hence the occurrence of temperature unevenness in the commingled material during heating can be reduced. Consequently, this configuration can reduce the occurrence of strength unevenness in a commingled material obtained by causing a resin to react, and can obtain a high quality commingled material.

To solve the problems described above and achieve the object, a pressing head is a pressing head for pressing a composite material including reinforcing fibers, and includes a pressing head main body; and a plurality of conductive wire-shaped materials provided, on a side of the pressing head main body to face the composite material, in a planar direction in which the reinforcing fibers are arranged, with intervals wider than intervals of the reinforcing fibers along a direction intersecting the reinforcing fibers.

With this configuration, even when conductive wire-shaped materials are not interwoven inside the composite material, a conductive loop can be formed by the reinforcing fibers and the conductive wire-shaped materials. Thus, sufficient eddy current can be induced inside the composite material in response to the application of the magnetic field irrespective of regions of the composite material, and hence the occurrence of temperature unevenness in the composite material during heating can be reduced. Consequently, this configuration can reduce the occurrence of strength unevenness in a composite material obtained by causing a resin to react, and can obtain a high quality composite material.

To solve the problems described above and achieve the object, a device for molding a composite material includes the pressing head described above; and a magnetic field coil for applying a magnetic field in a direction intersecting the plane on which the reinforcing fibers are arranged.

With this configuration, even when conductive wire-shaped materials are not interwoven inside the composite material, a conductive loop can be formed by the reinforcing fibers and the conductive wire-shaped materials. Thus, sufficient eddy current can be induced inside the composite material in response to the application of the magnetic field irrespective of regions of the composite material, and hence the occurrence of temperature unevenness in the composite material during heating can be reduced. Consequently, this configuration can reduce the occurrence of strength unevenness in a composite material obtained by causing a resin to react, and can obtain a high quality composite material.

To solve the problems described above and achieve the object, a device for molding a composite material includes a composite material supply unit that supplies a composite material including reinforcing fibers along a direction in which the reinforcing fibers extend; at least two electroconductive rollers provided, on a downstream side of the composite material supplied by the composite material supply unit, in parallel to a plane on which the reinforcing fibers are arranged and along a direction intersecting the reinforcing fibers, the at least two electroconductive rollers being disposed at a distance from each other in the direction in which the reinforcing fibers extend; and a magnetic field coil for applying a magnetic field to a region between the at least two electroconductive rollers in a direction intersecting the place on which the reinforcing fibers are arranged. The electroconductive roller presses the composite material supplied by the composite material supply unit in a direction orthogonal to the plane on which the reinforcing fibers are arranged, and conveys the composite material along the direction in which the reinforcing fibers extend.

With this configuration, even when conductive wire-shaped materials are not interwoven inside the composite material, a conductive loop is formed inside the composite material through the electroconductive roller. Thus, sufficient eddy current is induced inside the composite material in response to the application of the magnetic field to the conductive loop, and hence the occurrence of temperature unevenness in the composite material during heating can be reduced. Furthermore, the composite material is conveyed while being pressed by the electroconductive roller. Thus, a pressed region in the composite material and a region in the composite material in which the conductive loop is formed can be moved, and hence elongated composite materials in which conductive wire-shaped materials are not interwoven can be sequentially formed as appropriate.

### Advantageous Effects of Invention

According to the present invention, it is possible to provide a method for molding a composite material, a composite material, a pressing head, and a device for molding a composite material, which reduce the occurrence of temperature unevenness in the composite material during heating.

### Brief Description of Drawings

FIG. 1 is a diagram illustrating an example of a state of a composite material during or after processing by a composite material molding method according to a first embodiment of the present invention.
FIG. 2 is a schematic configuration diagram of a composite material molding device used for the composite material molding method according to the first embodiment of the present invention.
FIG. 3 is a flowchart of the composite material molding method according to the first embodiment of the present invention.
FIG. 4 is a diagram illustrating an example of a state of a composite material during or after processing by a composite material molding method according to a second embodiment of the present invention.
FIG. 5 is a diagram illustrating an example of a composite material processed by a composite material molding method according to a third embodiment of the present invention.
FIG. 6 is a schematic configuration diagram of a composite material molding device used for the composite material molding method according to the third embodiment of the present invention.
FIG. 7 is a rear diagram of a pressing head used for the composite material molding method according to the third embodiment of the present invention.
FIG. 8 is a rear diagram of a pressing head used for a composite material molding method according to a fourth embodiment of the present invention.
FIG. 9 is a schematic configuration diagram of a composite material molding device used for a composite material molding method according to a fifth embodiment of the present invention.

### Description of Embodiments

Embodiments according to the present invention are described in detail below with reference to the drawings. Note that the present invention is not limited by the embodiments. Components in the embodiments include the ones that can be easily replaced by the skilled person and the ones that are substantially the same. Furthermore, the components described below can be combined as appropriate.

### First embodiment

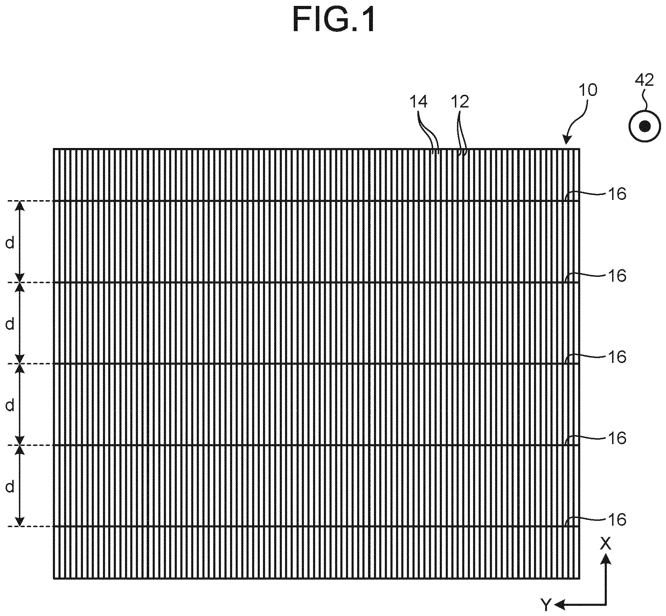

FIG. 1 is a diagram illustrating an example of a state of a composite material 10 during or after processing by a composite material molding method according to a first embodiment of the present invention. The composite material 10 illustrated in FIG. 1 indicates the state during processing when a resin 14 is in a state before reaction, and indicates the state after processing when the resin 14 is in a state after reaction. As illustrated in FIG. 1, the composite material 10 has reinforcing fibers 12, the resin 14, and conductive wire-shaped materials 16. Examples of the composite material 10 include a material molded into a flat plate shape extending planarly in an XY plane direction illustrated in FIG. 1, which is the horizontal direction. Note that, in the present invention, the composite material 10 is not limited to the form of being molded into a flat plate shape as described above, and may be molded into any shape such as a complicated shape having a curve.

In the first embodiment, most of the reinforcing fibers 12 extend inside the composite material 10 in an X-axis direction illustrated in FIG. 1, that is, in one direction in the plane on which the composite material 10 extends, and are arranged along a Y-axis direction illustrated in FIG. 1, that is, along the other direction in the plane on which the composite material 10 extends. The composite material 10 is what is called "unidirectional material". Note that the reinforcing fibers 12 are not limited to this arrangement form, and a part of the reinforcing fibers 12 may extend along a direction different from the one direction. Furthermore, for example, the composite material 10 may be a crossed material in which a part of the reinforcing fibers 12 are disposed inside the composite material 10 so as to extend along one direction in the plane on which the composite material 10 extends, and the remaining part of the reinforcing fibers 12 are disposed so as to extend along the other direction in the plane different from the one direction. In this case, when the reinforcing fibers 12 extending along one direction and the reinforcing fibers 12 extending along the other direction do not basically form a conductive loop inside the composite material 10, great actions and effects by a composite material molding method according to the embodiments of the present invention can be more remarkably obtained.

The resin 14 is impregnated in the reinforcing fiber 12, and reacts through a magnetic field application step S14 described later included in a composite material molding method according to the first embodiment of the present invention. Examples of the resin 14 include a thermosetting resin that shows thermosetting reaction from a softened state or a semi-cured state to a cured state when heated and a thermoplastic resin that shows thermofusion reaction when heated. In the following, when the thermosetting resin and the thermoplastic resin are not distinguished for the resin 14, the thermosetting reaction of the thermosetting resin and the thermofusion reaction of the thermoplastic resin are simply referred to as "reaction". The plurality of conductive wire-shaped materials 16 are added and arranged inside the composite material 10 through a conductive wire-shaped material arrangement step S12 described later included in the composite material molding method according to the first embodiment of the present invention, and are disposed in a plane on which the reinforcing fibers 12 in the composite material 10 are arranged, with intervals d wider than the intervals of the reinforcing fibers 12 along a direction intersecting the reinforcing fibers 12. In the first embodiment, the form in which the conductive wire-shaped materials 16 are disposed and interwoven is exemplified, but the conductive wire-shaped materials 16 are not limited thereto and may be disposed by another method. In the first embodiment, the conductive wire-shaped materials 16 are disposed at equal intervals d in the X-axis direction so as to extend along the Y-axis direction, which is a direction orthogonal to the direction in which the reinforcing fibers 12 extend.

The reinforcing fiber 12 has electric conductivity, and hence eddy current is induced inside the composite material 10 by a magnetic field 42 applied at the magnetic field application step S14 described later. When the eddy current is induced inside the composite material 10, the reinforcing fiber 12 generates heat by its own electric resistance. In other words, the composite material 10 generates heat inside in accordance with the magnetic field 42. Heat generated by the reinforcing fiber 12 included in the composite material 10 is transferred to the resin 14 included in the composite material 10, and contributes to the reaction of the resin 14.

The composite material 10 is light and has high strength. As the reinforcing fibers 12, carbon fibers are exemplified in the first embodiment. However, the reinforcing fibers 12 are not limited thereto, and may be other fibers having electric conductivity, for example, metal fibers. In the first embodiment, when the resin 14 is a thermosetting resin, a resin having an epoxy resin is exemplified. When the resin 14 has an epoxy resin, the resin 14 is lighter and has higher strength, which is preferred. In the first embodiment, when the resin 14 is a thermosetting resin, a polyester resin or a vinyl ester resin are exemplified as well. In the first embodiment, when the resin 14 is a thermoplastic resin, a polyamide resin, a polypropylene resin, an acrylonitrile butadiene styrene (ABS) resin, polyetheretherketone (PEEK), polyetherketoneketone (PEKK), and polyphenylenesulfide (PPS) are exemplified. However, the resin 14 is not limited thereto, and may be another resin.

The conductive wire-shaped material 16 has electric conductivity, and hence eddy current is induced inside the composite material 10 by the magnetic field 42 applied at the magnetic field application step S14 described later. The conductive wire-shaped material 16 is a thin conductive material extending long in one direction. In addition to the same material as the reinforcing fiber 12, an electric conductive material (for example, metal material) such as a wire of a thin electric conductive material (for example, metal wire) is exemplified.

The conductive wire-shaped materials 16 are disposed in contact with the reinforcing fibers 12. Thus, the reinforcing fibers 12 and the conductive wire-shaped materials 16 form a conductive loop inside the composite material 10. Note that the conductive wire-shaped materials 16 contact the reinforcing fibers 12 to form a conductive loop, and hence two or more conductive wire-shaped materials 16, that is, a plurality of conductive wire-shaped materials 16 need to be provided inside the composite material 10. The conductive loop formed by the reinforcing fibers 12 and the conductive wire-shaped materials 16 induces sufficient eddy current inside the composite material 10 by the magnetic field 42 applied at the magnetic field application step S14 described later. In this manner, the conductive loop formed by the reinforcing fibers 12 and the conductive wire-shaped materials 16 can generate sufficient heat inside the composite material 10.

The conductive wire-shaped materials 16 are in the state capable of forming a conductive loop with the reinforcing fibers 12 inside the composite material 10 irrespective of regions of the composite material 10. Thus, the conductive wire-shaped materials 16 are in the state capable of inducing sufficient eddy current inside the composite material 10 by the conductive loop formed between the conductive wire-shaped materials 16 and the reinforcing fibers 12 in response to the application of the magnetic field 42 irrespective of regions of the composite material 10. Consequently, the conductive wire-shaped materials 16 can contribute to the reduction of the occurrence of temperature unevenness in the composite material 10 during heating. The conductive wire-shaped materials 16 can reduce the occurrence of strength unevenness in the composite material 10 obtained by causing the resin 14 to react, and hence can contribute to obtaining a high quality composite material 10.

The conductive wire-shaped materials 16 are arranged inside the composite material 10 with the intervals d wider than the intervals of the reinforcing fibers 12. Thus, the number of contacts between the reinforcing fibers 12 and the conductive wire-shaped materials 16 can be reduced, and the cutting of the reinforcing fiber 12 due to stress concentration at a contact point of the reinforcing fiber 12 and the conductive wire-shaped material 16 caused when the composite material 10 is pressed can be reduced. Consequently, the reduction in strength of the composite material 10 due to the cutting of the reinforcing fiber 12 can be reduced.

The conductive wire-shaped materials 16 are interwoven into the composite material 10. Thus, the conductive wire-shaped materials 16 are in the state in which the conductive wire-shaped materials 16 more reliably contact the reinforcing fibers 12 and a conductive loop is more reliably formed inside the composite material 10. Consequently, the conductive wire-shaped materials 16 can more reliably induce sufficient eddy current inside the composite material 10 by the conductive loop in response to the application of the magnetic field 42, and hence can contribute to the further reduction of the occurrence of temperature unevenness in the composite material 10 during heating.

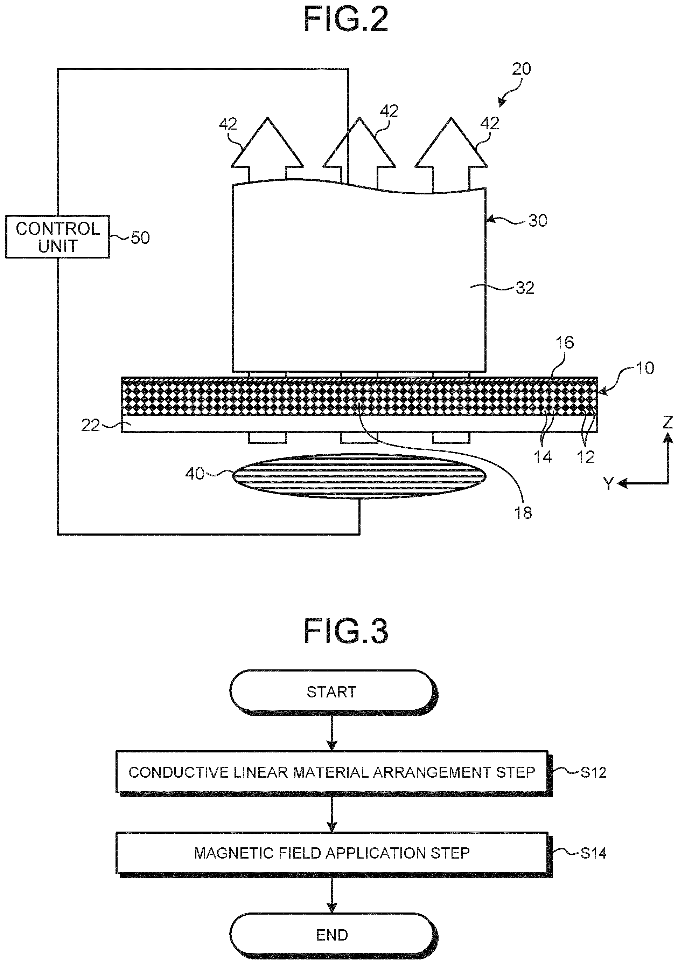

FIG. 2 is a schematic configuration diagram of a composite material molding device 20 used for the composite material molding method according to the first embodiment of the present invention. Note that the Y-axis direction in FIG. 1 matches a Y-axis direction in FIG. 2, and also in the figures to be referred to in the following description, X-axis directions, Y-axis directions, and Z-axis directions match one another.

As illustrated in FIG. 2, the composite material molding device 20 includes a pressing head 30, a magnetic field coil 40, and a control unit 50. The composite material molding device 20 impregnates the reinforcing fibers 12 with the resin 14, and causes the resin 14 to react while a pre-reaction composite material 10 in which the conductive wire-shaped materials 16 are arranged are molded into a predetermined size and a predetermined shape at the magnetic field application step S14 described later. In the first embodiment, the pre-reaction composite material 10 is, for example, a prepreg of the composite material.

In the first embodiment, the composite material 10 is molded in a manner that, in the composite material molding device 20, the composite material 10 is disposed on the upper side in the vertical direction of a flat table 22 extending in an XY plane direction that is orthogonal to a direction along the Z-axis direction in FIG. 2 as the vertical direction and that is the horizontal direction. In other words, in the first embodiment, the vertical direction and the thickness direction of the composite material 10 match each other in the Z-axis direction. In the first embodiment, the lower side of the composite material 10 in the vertical direction is referred to as "one side", and the upper side of the composite material 10 in the vertical direction is referred to as "other side". In the first embodiment, a region of the composite material 10 that is pressed and heated by the pressing head 30 and the magnetic field coil 40 is referred to as "predetermined region 18". Note that, in the present invention, the composite material 10 is not limited to the form of such arrangement, and any arrangement may be employed. In the present invention, the predetermined region 18 is not limited to a partial region of the composite material 10 as indicated in the first embodiment, and may be the entire region of the composite material 10.

The flat table 22 is made of a material transparent to the magnetic field 42 applied by the magnetic field coil 40, that is, a material with which eddy current is not hardly induced inside by the magnetic field 42 applied by the magnetic field coil 40 and heat is not hardly generated inside in accordance with the magnetic field 42 applied by the magnetic field coil 40. As the material forming the flat table 22, in the first embodiment, a PEEK resin and ceramics, both of which are transparent to the magnetic field 42 and have high pressure resistance and thermal resistance, are preferred.

As illustrated in FIG. 2, the pressing head 30 is provided to face the other side of the predetermined region 18 of the composite material 10, and is provided to be opposed to the magnetic field coil 40 in the vertical direction through the composite material 10 and the flat table 22. The pressing head 30 presses the predetermined region 18 of the composite material 10 from the other side of the composite material 10.

As illustrated in FIG. 2, the pressing head 30 includes a pressing head main body 32. The pressing head main body 32 is formed from a material transparent to the magnetic field 42 applied by the magnetic field coil 40. As the material forming the pressing head main body 32, PEEK resin and ceramics, which are materials transparent to the magnetic field 42 and having high pressure resistance and thermal resistance, are preferred.

The pressing head main body 32 is provided with a pressing cylinder (not shown) on the upper side in the vertical direction in FIG. 2, and the pressing cylinder is electrically connected to the control unit 50. When the pressing cylinder in the pressing head main body 32 is controlled by the control unit 50, the pressing head 30 can move up and down in the vertical direction with respect to the composite material 10, and can change pressure applied to the composite material 10 downward in the vertical direction. The pressing head 30 presses the predetermined region 18 of the composite material 10 with preferably 200 kPa or more and 800 kPa or less, more preferably 300 kPa or more and 600 kPa or less.

As illustrated in FIG. 2, the magnetic field coil 40 is provided to face one side of the predetermined region 18 of the composite material 10, and is provided to be opposed to the pressing head 30 in the vertical direction through the flat table 22 and the composite material 10. The magnetic field coil 40 applies the magnetic field 42 to the predetermined region 18 of the composite material 10 from one side of the composite material 10.

In the first embodiment, the magnetic field coil 40 in which one coil is disposed is exemplified, but a plurality of coils may be arranged into a predetermined shape, that is, a square shape. The magnetic field coil 40 applies the magnetic field 42 to a region equivalent to the region in the horizontal direction in which the coil is disposed. In the first embodiment, the region in which the magnetic field coil 40 applies the magnetic field 42 corresponds to the predetermined region 18 of the composite material 10.

The center axis of the coil included in the magnetic field coil 40 is oriented in a direction intersecting the plane on which the composite material 10 extends. The magnetic field coil 40 generates the magnetic field 42 along a direction intersecting the plane on which the reinforcing fiber 12 are arranged, thereby generating the magnetic field 42 along a direction intersecting a plane formed by a conductive loop by the reinforcing fibers 12 and the conductive wire-shaped materials 16 formed inside the composite material 10. The magnetic field coil 40 is disposed such that an end portion of the magnetic field coil 40 on the upper side in the vertical direction is away from the surface of the composite material 10 on one side with a predetermined distance. As the predetermined distance, 1.5 cm is exemplified.

It is preferred that a coil included in the magnetic field coil 40 have a center axis oriented in a direction along the vertical direction. In this case, the magnetic field coil 40 generates the magnetic field 42 along the direction orthogonal to the plane on which the reinforcing fibers 12 are arranged, thereby generating the magnetic field 42 along a direction orthogonal to the plane formed by a conductive loop by the reinforcing fibers 12 and the conductive wire-shaped materials 16 formed inside the composite material 10. When the magnetic field coil 40 applies the magnetic field 42 along the direction orthogonal to the plane on which the conductive loop is formed, eddy current can be efficiently induced in the conductive loop, and hence heat can be efficiently generated. Consequently, the magnetic field coil 40 can efficiently heat the predetermined region 18 of the composite material 10.

The magnetic field coil 40 is electrically connected to the control unit 50. Under control of the control unit 50, the magnetic field coil 40 can change the magnitude and the frequency of the magnetic field 42 applied to the composite material 10 upward in the vertical direction. It is preferred that the magnetic field coil 40 apply a high frequency magnetic field of 900 kHz or more to the predetermined region 18 of the composite material 10.

The control unit 50 is electrically connected to a pressing cylinder provided in the pressing head main body 32. The control unit 50 is electrically connected to the magnetic field coil 40. The control unit 50 controls the pressing cylinder to control the pressing head 30, thereby being capable of controlling the relative position of the pressing head 30 in the vertical direction with respect to the composite material 10 and the pressure applied to the composite material 10 downward in the vertical direction. By controlling current caused to flow through the magnetic field coil 40, the control unit 50 can control the magnitude and the frequency of the magnetic field 42 applied by the magnetic field coil 40, thereby being capable of controlling heating temperature, temperature increase rate, and heating time of the heating of the composite material 10 depending on the specific resin composition of the composite material 10.

The control unit 50 includes a storage unit and a processing unit. For example, the storage unit includes a storage device such as a RAM, a ROM, and a flash memory, and stores therein software programs processed by the processing unit and data to be referred to by the software programs. The storage unit also functions as a storage area in which the processing unit temporarily stores processing results. The processing unit reads and processes software programs from the storage unit to exhibit functions corresponding to the contents of the software programs, specifically, various functions capable of executing the composite material molding method by the composite material molding device 20.

The composite material molding device 20 may be provided with a movement mechanism (not shown) for synchronously changing the position of the pressing head 30 in the horizontal direction with respect to the composite material 10 and the position of the magnetic field coil 40 in the horizontal direction with respect to the composite material 10. The movement mechanism is controlled by the control unit 50, and can move the predetermined region 18, which is a region pressed by the pressing head 30 and a region applied with the magnetic field 42 by the magnetic field coil 40, in the composite material 10 during the molding by the composite material molding device 20. The control unit 50 can determine as needed where the predetermined region 18 has moved in the composite material 10.

FIG. 3 is a flowchart of the composite material molding method according to the first embodiment of the present invention. The composite material molding method according to the first embodiment is described with reference to FIG. 3. The composite material molding method according to the first embodiment is executed by the composite material molding device 20. As illustrated in FIG. 3, the composite material molding method according to the first embodiment includes a conductive wire-shaped material arrangement step S12 and a magnetic field application step S14.

The conductive wire-shaped material arrangement step S12 is a step at which the conductive wire-shaped materials 16 are added and arranged in a pre-reaction composite material 10, which have the reinforcing fibers 12 extending in one direction, in the plane on which the reinforcing fibers 12 in the composite material 10 are arranged in the direction intersecting the reinforcing fibers 12 so as to have the intervals d wider than the reinforcing fibers 12. At the conductive wire-shaped material arrangement step S12, in the first embodiment, the conductive wire-shaped materials 16 are interwoven into the composite material 10, so that the plurality of conductive wire-shaped materials 16 are arranged in the pre-reaction composite material 10. After the conductive wire-shaped materials 16 are arranged in the composite material 10 through the conductive wire-shaped material arrangement step S12, a conductive loop can be formed inside the composite material 10 by the reinforcing fibers 12 and the conductive wire-shaped material 16.

At the conductive wire-shaped material arrangement step S12, the region in which the conductive wire-shaped materials 16 are provided becomes a region in which a conductive loop is formed inside the composite material 10 by the reinforcing fibers 12 and the conductive wire-shaped material 16 irrespective of regions of the composite material 10. Thus, at the conductive wire-shaped material arrangement step S12, the region in which the conductive wire-shaped materials 16 are provided becomes a region in which sufficient eddy current is induced inside the composite material 10 by the conductive loop formed by the reinforcing fibers 12 and the conductive wire-shaped materials 16 in response to the application of the magnetic field 42 and heat is generated irrespective of regions of the composite material 10. Accordingly, at the conductive wire-shaped material arrangement step S12, the composite material 10 becomes the state in which the occurrence of temperature unevenness in the composite material 10 during heating is reduced. At the conductive wire-shaped material arrangement step S12, the composite material 10 becomes the state in which the occurrence of strength unevenness during reaction of the resin 14 is reduced, that is, the state in which a high quality composite material 10 can be obtained.

At the conductive wire-shaped material arrangement step S12, the conductive wire-shaped materials 16 are interwoven into the composite material 10. Thus, at the conductive wire-shaped material arrangement step S12, the conductive wire-shaped materials 16 can be arranged in the state of being more reliably in contact with the reinforcing fibers 12, and a conductive loop is more reliably formed inside the composite material 10. Consequently, at the conductive wire-shaped material arrangement step S12, the conductive wire-shaped materials 16 can become the state in which sufficient eddy current is more reliably induced inside the composite material 10 by the conductive loop formed between the conductive wire-shaped materials 16 and the reinforcing fibers 12 in response to the application of the magnetic field 42, and hence can become the state in which the occurrence of temperature unevenness in the composite material 10 during heating is reduced.

After the conductive wire-shaped material arrangement step S12, a step for executing the magnetic field application step S14 for the pre-reaction composite material 10 in which the conductive wire-shaped materials 16 are arranged is executed. First, a step for disposing the pre-reaction composite material 10 on the upper side of the flat table 22 in the vertical direction is executed. Next, a step for pressing the pre-reaction composite material 10 disposed on the flat table 22 by the pressing head 30 is executed. At the pressing step, specifically, first, the control unit 50 moves the pressing head 30 to a position facing the other side of the pre-reaction composite material 10 in the vertical direction before reaction in which the conductive wire-shaped materials 16 are arranged, so that the pressing head 30 is oriented to the predetermined region 18 of the composite material 10. At the pressing step, next, the control unit 50 presses the predetermined region 18 of the composite material 10 from the other side of the predetermined region 18 while pushing the pressing head 30 against the other side of the predetermined region 18 of the composite material 10.

The magnetic field application step S14 is a step for applying a magnetic field 42 to the composite material 10 in which the conductive wire-shaped materials 16 are arranged at the conductive wire-shaped material arrangement step S12 in a direction intersecting the plane on which the reinforcing fibers 12 are arranged. Specifically, at the magnetic field application step S14, first, the control unit 50 moves and disposes the magnetic field coil 40 to a position facing one side of the predetermined region 18 of the composite material 10 disposed on the flat table 22 in the vertical direction and pressed by the pressing head 30 such that the magnetic field coil 40 is oriented to the predetermined region 18 of the composite material 10. At the magnetic field application step S14, next, the control unit 50 causes current to flow through the magnetic field coil 40 such that the magnetic field 42 is applied by the magnetic field coil 40 from one side of the composite material 10 to heat the predetermined region 18 of the composite material 10.

At the magnetic field application step S14, the magnetic field 42 is generated along a direction intersecting the plane on which the conductive loop is formed by the reinforcing fibers 12 and the conductive wire-shaped materials 16 formed inside the composite material 10 at the conductive wire-shaped material arrangement step S12. Thus, at the magnetic field application step S14, the conductive loop is applied with the magnetic field 42 along the direction orthogonal to the plane on which the conductive loop is formed, and hence eddy current is efficiently induced, and heat can be efficiently generated. Consequently, at the magnetic field application step S14, the predetermined region 18 of the composite material 10 can be efficiently heated.

The composite material molding method according to the first embodiment and the composite material 10 formed by this method have the configurations described above. A conductive loop is formed by the reinforcing fibers 12 and the conductive wire-shaped materials 16 inside the composite material 10, and hence sufficient eddy current is induced inside the composite material 10 in response to the application of the magnetic field 42 irrespective of regions of the composite material 10.
Thus, the occurrence of temperature unevenness in the composite material 10 during heating can be reduced. Consequently, the composite material molding method according to the first embodiment and the composite material 10 formed by this method can reduce the occurrence of strength unevenness in the composite material 10 obtained by causing the resin 14 to react, and can thus obtain the high quality composite material 10.

In the composite material molding method according to the first embodiment and the composite material 10 molded by the method, it is preferred that the conductive wire-shaped materials 16 be interwoven into the composite material 10 such that the plurality of conductive wire-shaped materials 16 are arranged in the pre-reaction composite material 10. Thus, in the composite material molding method according to the first embodiment and the composite material 10 molded by the method, a conductive loop is more reliably formed inside the composite material 10. Consequently, sufficient eddy current is more reliably induced inside the composite material 10 in response to the application of the magnetic field 42, and hence the occurrence of temperature unevenness in the composite material 10 during heating can be further reduced.

### Second embodiment

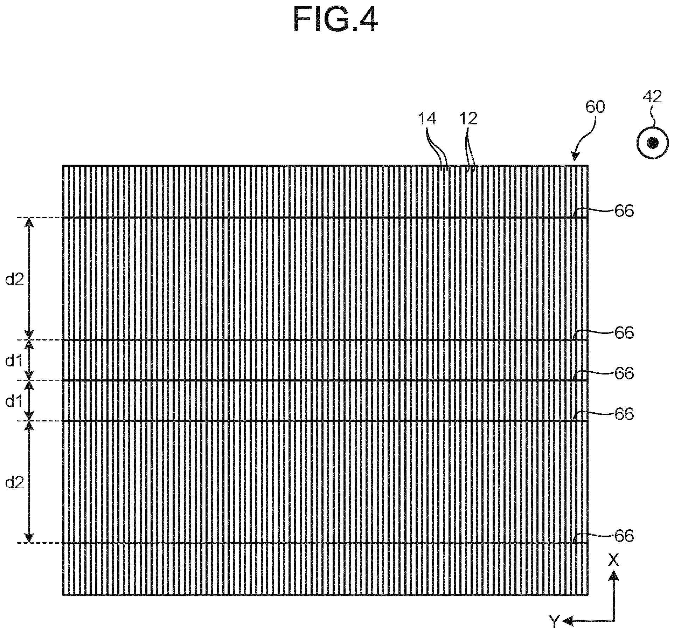

FIG. 4 is a diagram illustrating an example of a state of a composite material 60 during or after processing by a composite material molding method according to a second embodiment of the present invention. The composite material 60 during or after processing by the composite material molding method according to the second embodiment is different from the composite material 10 during or after processing by the composite material molding method according to the first embodiment in that the intervals of the conductive wire-shaped materials 16 are changed. Note that the other configurations in the composite material 60 during or after processing by the composite material molding method according to the second embodiment are the same as those of the composite material 10 during or after processing by the composite material molding method according to the first embodiment. Conductive wire-shaped materials 66 in the composite material 60 according to the second embodiment are described below with reference symbols different from those of the conductive wire-shaped materials 16 in the composite material 10 according to the first embodiment in order to distinguish therefrom. In the composite material 60 during or after processing by the composite material molding method according to the second embodiment, the same configurations as in the composite material 10 during or after processing by the composite material molding method according to the first embodiment are denoted by the same reference symbol group as in the first embodiment, and detailed descriptions thereof are omitted. A composite material molding device 20 used for the composite material molding method according to the second embodiment of the present invention has the same configurations as in the composite material molding device 20 used for the composite material molding method according to the first embodiment of the present invention. The same configurations are denoted by the same reference symbol group as in the first embodiment, and detailed descriptions thereof are omitted.

As illustrated in FIG. 4, the composite material 60 includes the reinforcing fibers 12, the resin 14, and conductive wire-shaped materials 66. As the conductive wire-shaped material 66, the same material as the conductive wire-shaped material 16 according to the first embodiment is exemplified. The plurality of conductive wire-shaped materials 66 are arranged inside the composite material 60 through a conductive wire-shaped material arrangement step S12 described later included in the composite material molding method according to the second embodiment of the present invention, and are disposed in a plane on which the reinforcing fibers 12 of the composite material 60 are arranged in a direction intersecting the reinforcing fibers 12. In the second embodiment, the conductive wire-shaped materials 66 are disposed to extend along the Y-axis direction, which is a direction orthogonal to the direction in which the reinforcing fibers 12 extend. As illustrated in FIG. 4, the conductive wire-shaped materials 66 are disposed at a center region of the composite material 60 so as to be interwoven at intervals d1 wider than the intervals of the reinforcing fibers 12 in the X-axis direction. As illustrated in FIG. 4, the conductive wire-shaped materials 66 are interwoven in peripheral regions of the composite material 60 at intervals d2 wider than the intervals d1 in the X-axis direction.

In the composite material 60, the conductive wire-shaped materials 66 are disposed so as to be denser at the center region in which eddy current is not relatively easily induced than the peripheral regions in which eddy current is relatively easily induced. Thus, in the composite material 60, the conductive wire-shaped materials 66 more easily cause sufficient eddy current inside the composite material 60 particularly at the center region of the composite material 60, and hence the occurrence of temperature unevenness in the composite material 60 during heating can be further reduced.

The composite material molding method according to the second embodiment is executed by the composite material molding device 20 similarly to the composite material molding method according to the first embodiment. The composite material molding method according to the second embodiment is different from the composite material molding method according to the first embodiment in changing the intervals of the arrangement of the conductive wire-shaped materials 16 arranged at the conductive wire-shaped material arrangement step S12.

The composite material molding method according to the second embodiment and the composite material 60 molded by the method have the configurations as described above, and hence exhibit the same actions and effects as in the composite material molding method according to the first embodiment and the composite material 10 molded by the method. In addition, in the composite material molding method according to the second embodiment and the composite material 60 molded by the method, the intervals d2 of the conductive wire-shaped materials 66 at the peripheral regions of the composite material 60 are larger than the intervals d1 of the conductive wire-shaped materials 66 at the center region of the composite material 60. Consequently, in the composite material molding method according to the second embodiment and the composite material 60 molded by the method, sufficient eddy current is induced inside the composite material 60 particularly at the center region of the composite material 60, and hence the occurrence of temperature unevenness in the composite material 60 during heating can be further reduced.

### Third embodiment

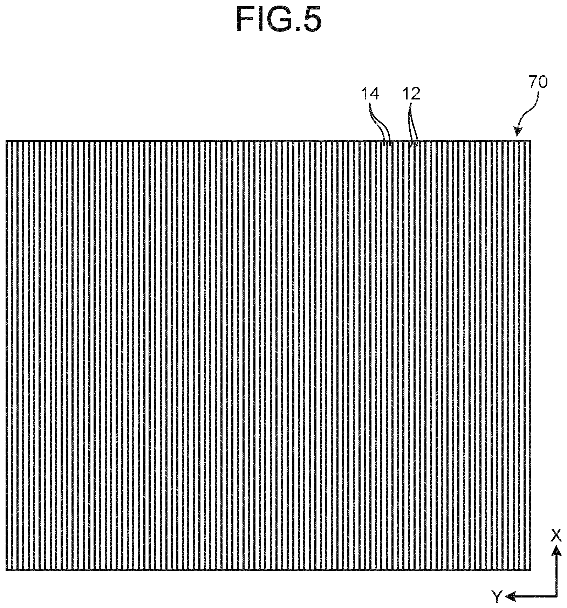

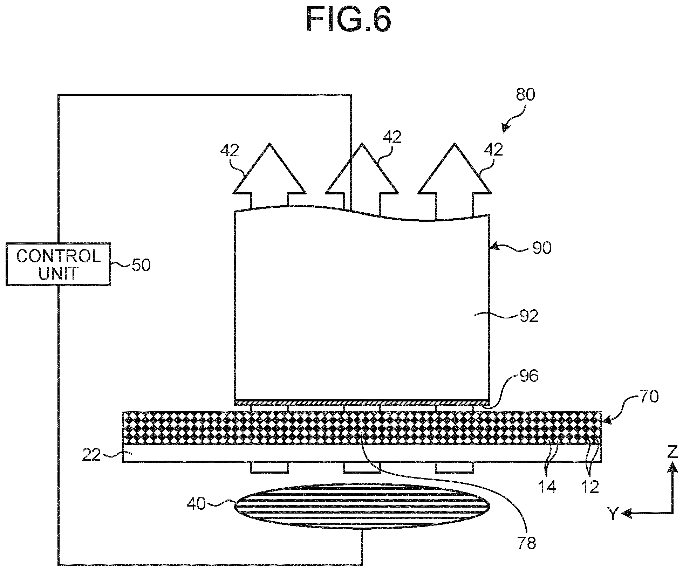

FIG. 5 is a diagram illustrating an example of a composite material 70 processed by a composite material molding method according to a third embodiment of the present invention. FIG. 6 is a schematic configuration diagram of a composite material molding device 80 used for the composite material molding method according to the third embodiment of the present invention. In the composite material molding device 80 according to the third embodiment is different from the composite material molding method according to the first embodiment in that the composite material 10 to be processed is changed to the composite material 70, and different from the composite material molding device 20 used for the composite material molding method in that the pressing head 30 is changed to a pressing head 90. Note that the other configurations in the composite material molding device 80 according to the third embodiment are the same as in the composite material molding device 20 according to the first embodiment. In the following, a predetermined region 78 in the composite material 70 according to the third embodiment is described with a different reference symbol in order to be distinguished from the predetermined region 18 in the composite material 10 according to the first embodiment. A pressing head main body 92 in the pressing head 90 according to the third embodiment is described with a different reference symbol in order to be distinguished from the pressing head main body 32 in the pressing head 30 according to the first embodiment. The other configurations in the composite material 70 and the composite material molding device 80 according to the third embodiment that are the same as in the first embodiment are denoted by the same reference symbol group as in the first embodiment, and detailed descriptions thereof are omitted.

As illustrated in FIG. 5, the composite material 70 has the reinforcing fibers 12 and the resin 14. The composite material 70 is different from the composite material 10 according to the first embodiment in that the conductive wire-shaped materials 16 are not arranged.

As illustrated in FIG. 6, the composite material molding device 80 includes a pressing head 90, a magnetic field coil 40, and a control unit 50. The control unit 50 according to the third embodiment controls the pressing head 90 instead of the control unit 50 according to the first embodiment that controls the pressing head 30. The composite material molding device 80 causes the resin 14 to react while molding a pre-reaction composite material 70, in which the reinforcing fibers 12 are impregnated with the resin 14, into a predetermined size and a predetermined shape.

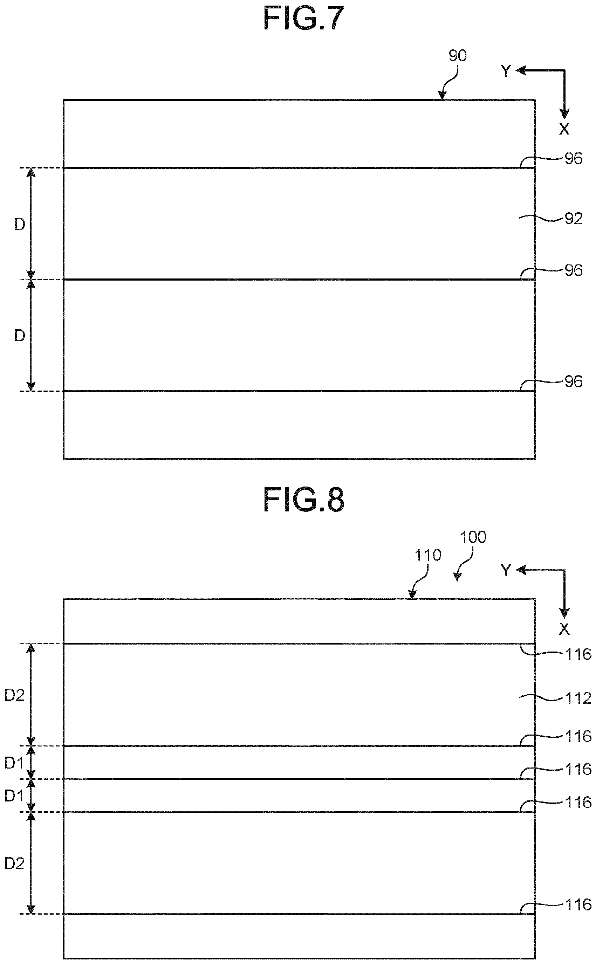

FIG. 7 is a rear diagram of the pressing head 90 used for the composite material molding method according to the third embodiment of the present invention. The rear diagram of the pressing head 90 illustrated in FIG. 7 is a diagram of a surface of the pressing head 90 on the side to face the composite material 70 as seen from the side of the composite material 70 upward in the vertical direction. As illustrated in FIG. 6 and FIG. 7, the pressing head 90 includes a pressing head main body 92 and conductive wire-shaped materials 96. The pressing head main body 92 is different from the pressing head main body 32 according to the first embodiment in that the conductive wire-shaped materials 96 are arranged. The other configurations in the pressing head main body 92 are the same as in the pressing head main body 32 according to the first embodiment.

As illustrated in FIG. 7, the conductive wire-shaped materials 96 are provided on the side of the pressing head main body 92 that is to face the composite material 70 so as to be arranged along the direction intersecting the reinforcing fiber 12 with intervals D wider than the intervals of the reinforcing fibers 12 in a planar direction in which the reinforcing fibers 12 are arranged. In the third embodiment, the conductive wire-shaped materials 96 are arranged to extend along the Y-axis direction, which is a direction orthogonal to the direction in which the reinforcing fibers 12 extend, with equal intervals D in the X-axis direction. As the conductive wire-shaped material 96, the same material as the conductive wire-shaped material 16 according to the first embodiment is exemplified.

The pressing head 90 is provided with the conductive wire-shaped material 96 on the side of the pressing head main body 92 to face the composite material 70, and hence can press the composite material 70 while pushing the conductive wire-shaped material 96 against the predetermined region 78 of the composite material 70. When the predetermined region 78 of the composite material 70 is pressed by the pressing head 90, the conductive wire-shaped materials 96 are disposed in contact with the reinforcing fibers 12. Thus, similarly to the reinforcing fibers 12 and the conductive wire-shaped material 16 according to the first embodiment, the reinforcing fibers 12 and the conductive wire-shaped materials 96 form a conductive loop in a surface layer region inside the composite material 70 in the predetermined region 78. Note that the conductive wire-shaped materials 96 contact the reinforcing fibers 12 to form a conductive loop, and hence two or more conductive wire-shaped materials 96, that is, a plurality of conductive wire-shaped materials 96, need to be provided inside the composite material 70. The conductive loop formed by the reinforcing fibers 12 and the conductive wire-shaped materials 96 induce sufficient eddy current inside the composite material 70 by the magnetic field 42 applied at the magnetic field application step S14. Consequently, the conductive loop formed by the reinforcing fibers 12 and the conductive wire-shaped materials 96 can generate sufficient heat inside the composite material 70 in the predetermined region 78.

Actions of the composite material molding device 80 according to the third embodiment having the configurations described above are described below. A composite material molding method according to the third embodiment, which is a processing method executed by the composite material molding device 80 according to the third embodiment, is different from the composite material molding method according to the first embodiment in that the conductive wire-shaped material arrangement step S12 is changed as follows. A conductive wire-shaped material arrangement step S12 according to the third embodiment is different in that the interweaving of the conductive wire-shaped materials 16 into the composite material 10 at the conductive wire-shaped material arrangement step S12 according to the first embodiment is changed to the pressing of the predetermined region 78 in the composite material 70 by the pressing head 90 in which the conductive wire-shaped materials 96 are provided.

At the conductive wire-shaped material arrangement step S12 according to the third embodiment, the predetermined region 78 of the composite material 70 is pressed by the pressing head 90 to which the conductive wire-shaped materials 96 are provided on the side to face the composite material 70, and the conductive wire-shaped materials 96 are pushed against the predetermined region 78 of the composite material 70 such that the conductive wire-shaped materials 96 are brought into contact with the reinforcing fibers 12, thereby arranging the plurality of conductive wire-shaped materials 96 in the predetermined region 78 of the pre-reaction composite material 70.

At the conductive wire-shaped material arrangement step S12 according to the third embodiment, the composite material 70 is pressed by the pressing head 90 to which the conductive wire-shaped materials 96 are provided on the side to face the composite material 70. Thus, at the conductive wire-shaped material arrangement step S12 according to the third embodiment, even when the conductive wire-shaped materials 96 are not interwoven inside the composite material 70, a conductive loop is formed by the reinforcing fibers 12 and the conductive wire-shaped materials 96 inside the composite material 70. Consequently, at the conductive wire-shaped material arrangement step S12 according to the third embodiment, even when the conductive wire-shaped materials 96 are not interwoven inside the composite material 70, the predetermined region 78 as a region pressed against the conductive wire-shaped materials 96 becomes the state in which sufficient eddy current is induced inside the composite material 70 by the conductive loop formed by the reinforcing fibers 12 and the conductive wire-shaped materials 96 in response to the application of the magnetic field 42 irrespective of regions of the composite material 70, and heat is generated. Thus, at the conductive wire-shaped material arrangement step S12 according to the third embodiment, the composite material 70 becomes the state in which the occurrence of temperature unevenness in the composite material 70 during heating is reduced. At the conductive wire-shaped material arrangement step S12 according to the third embodiment, the composite material 70 becomes the state in which the occurrence of strength unevenness when the resin 14 is caused to react is reduced, that is, the state in which a high quality composite material 70 can be obtained.

The pressing head 90 and the composite material molding device 80 according to the third embodiment and the composite material molding method using the composite material molding device 80 have the configurations described above, and hence exhibit the same actions and effects as those of the composite material molding method according to the first embodiment and the composite material 10 formed by the method. In addition, the pressing head 90 and the composite material molding device 80 according to the third embodiment and the composite material molding method using the composite material molding device 80 press the composite material 70 by the pressing head 90 to which the conductive wire-shaped materials 96 are provided on the side to face the composite material 70. Thus, in the pressing head 90, the composite material molding device 80, and the composite material molding method by the composite material molding device 80 according to the third embodiment, even when the conductive wire-shaped materials 96 are not interwoven inside the composite material 70, a conductive loop is formed inside the composite material 70. Consequently, sufficient eddy current is induced inside the composite material 70 in response to the application of the magnetic field 42, and hence the occurrence of temperature unevenness in the composite material 70 during heating can be reduced.

### Fourth embodiment

FIG. 8 is a rear diagram of a pressing head 110 used for a composite material molding method according to a fourth embodiment of the present invention. The rear diagram of the pressing head 110 illustrated in FIG. 8 is a diagram of a surface of the pressing head 110 on the side to face the composite material 70 as seen from the side of the composite material 70 upward in the vertical direction. The composite material molding device 100 according to the fourth embodiment is different from the composite material molding device 80 used for the composite material molding method according to the third embodiment in that the pressing head 90 is changed to the pressing head 110. Note that the other configurations in the composite material molding device 100 according to the fourth embodiment are the same as those in the composite material molding device 80 according to the third embodiment. In the following, a pressing head main body 112 in the pressing head 110 according to the fourth embodiment is described with a different reference symbol in order to be distinguished from the pressing head main body 92 in the pressing head 90 according to the third embodiment. The other configurations in the composite material molding device 100 according to the fourth embodiment that are the same as in the third embodiment are denoted by the same reference symbol group as in the third embodiment, and detailed descriptions thereof are omitted.

The composite material molding device 100 includes a pressing head 110, a magnetic field coil 40, and a control unit 50. The control unit 50 according to the fourth embodiment controls the pressing head 110 instead of controlling the pressing head 90 by the control unit 50 according to the third embodiment. The composite material molding device 100 causes the resin 14 to react while molding the pre-reaction composite material 70, in which the reinforcing fibers 12 are impregnated with the resin 14, into a predetermined size and a predetermined shape.

As illustrated in FIG. 8, the pressing head 110 includes a pressing head main body 112 and a conductive wire-shaped material 116. The pressing head main body 112 is different from the pressing head main body 92 according to the third embodiment in that the intervals of the arrangement of the conductive wire-shaped materials 96 are changed. In the following, the conductive wire-shaped material 116 in the pressing head main body 112 according to the fourth embodiment is described with a different reference symbol in order to be distinguished from the conductive wire-shaped material 96 in the pressing head main body 92 according to the third embodiment. The other configurations in the pressing head main body 112 are the same as in the pressing head main body 92 according to the third embodiment.

As illustrated in FIG. 8, the conductive wire-shaped materials 116 are provided on the side of the pressing head main body 112 to face the composite material 70 so as to be arranged along the direction intersecting the reinforcing fibers 12 in a planar direction in which the reinforcing fibers 12 are arranged. In the fourth embodiment, the conductive wire-shaped materials 116 are disposed to extend along the Y-axis direction, which is a direction orthogonal to the direction in which the reinforcing fibers 12 extend. As illustrated in FIG. 8, the conductive wire-shaped materials 116 are provided and arranged in a center region of the surface of the pressing head main body 112 on the side to face the composite material 70 with intervals D1 wider than the intervals of the reinforcing fibers 12 in the X-axis direction. As illustrated in FIG. 8, the conductive wire-shaped materials 116 are provided and arranged in peripheral regions of the pressing head main body 112 on the side to face the composite material 70 with intervals D2 wider than the intervals D1 in the X-axis direction. As the conductive wire-shaped material 116, the same material as the conductive wire-shaped material 96 according to the third embodiment is exemplified.

The pressing head 110 presses the predetermined region 78 of the composite material 70, thereby pressing the conductive wire-shaped materials 116 such that the conductive wire-shaped materials 116 are denser at the center region of the composite material 70 in which eddy current is not relatively easily induced than the peripheral regions of the composite material 70 in which eddy current is relatively easily induced. Thus, the pressing head 110 causes the conductive wire-shaped materials 116 to induce sufficient eddy current inside the predetermined region 78 of the composite material 70 particularly at the center region of the predetermined region 78 of the composite material 70, and hence the occurrence of temperature unevenness in the composite material 70 during heating can be further reduced.

Actions of the composite material molding device 100 according to the fourth embodiment having the configurations described above are described below. A composite material molding method according to the fourth embodiment, which is a processing method executed by the composite material molding device 100 according to the fourth embodiment, is different from the composite material molding method according to the third embodiment in that the conductive wire-shaped material arrangement step S12 is changed as follows. The conductive wire-shaped material arrangement step S12 according to the fourth embodiment is different from the conductive wire-shaped material arrangement step S12 according to the third embodiment in that the pressing head 90 for pressing the predetermined region 78 of the composite material 70 is changed to the pressing head 110. In other words, the conductive wire-shaped material arrangement step S12 according to the fourth embodiment is different from the conductive wire-shaped material arrangement step S12 according to the third embodiment in that the intervals of the conductive wire-shaped materials 96 to be pushed against the predetermined region 78 of the composite material 70 are changed.

The pressing head 110, the composite material molding device 100, and the composite material molding method using the composite material molding device 100 according to the fourth embodiment have the configurations described above, and hence exhibit the same actions and effects as those of the pressing head 90, the composite material molding device 80, and the composite material molding method using the composite material molding device 80 according to the third embodiment. In addition, in the pressing head 110, the composite material molding device 100, and the composite material molding method by the composite material molding device 100 according to the fourth embodiment, the intervals D2 of the conductive wire-shaped materials 116 at the peripheral regions are larger than the intervals D1 of the conductive wire-shaped materials 116 at the center region on the surface of the pressing head main body 112 on the side to face the composite material 70 that is pressed against the predetermined region 78 of the composite material 70. Thus, in the pressing head 110, the composite material molding device 100, and the composite material molding method by the composite material molding device 100 according to the fourth embodiment, particularly at the center region of the predetermined region 78 of the composite material 70, sufficient eddy current is induced inside the predetermined region 78 of the composite material 70, and hence the occurrence of temperature unevenness in the composite material 70 during heating can be further reduced.

### Fifth embodiment

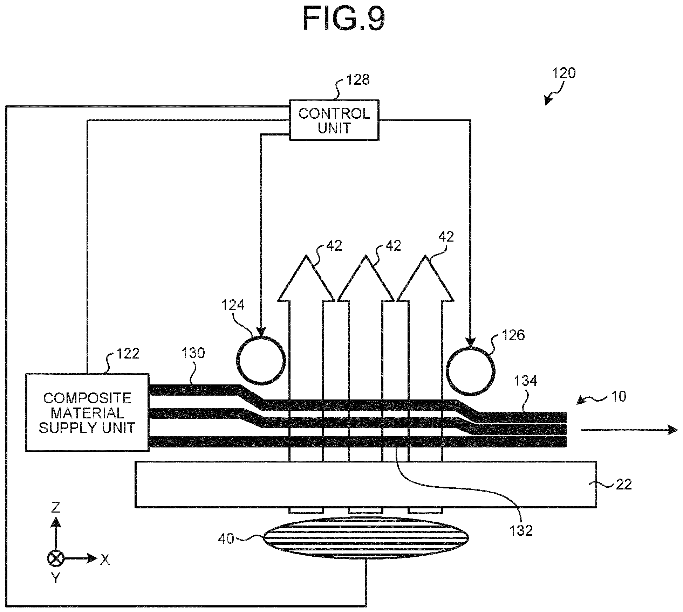

FIG. 9 is a schematic configuration diagram of a composite material molding device 120 used for a composite material molding method according to a fifth embodiment of the present invention. The configurations in the composite material molding device 120 according to the fifth embodiment that are the same as in the third and fourth embodiments are denoted by the same reference symbol group as in the third and fourth embodiments, and detailed descriptions thereof are omitted.

The composite material molding device 120 illustrated in FIG. 9 impregnates the reinforcing fibers 12 extending in one direction with the resin 14, and causes the resin 14 to react while sequentially molding a pre-reaction composite material 70 in which the elongated conductive wire-shaped materials 16 are not arranged in the same direction as the direction in which the reinforcing fibers 12 extend into a predetermined size and a predetermined shape along the longitudinal direction. In the fifth embodiment, the pre-reaction composite material 70 is, for example, a prepreg of the composite material.

As illustrated in FIG. 9, the composite material molding device 120 includes a composite material supply unit 122, a compression roller 124, a consolidation roller 126, and a control unit 128. The composite material supply unit 122 supplies the composite material 70 having the reinforcing fibers 12 extending in an X-axis direction as one direction onto a flat table 22 along a +X direction of the X-axis direction as the direction in which the reinforcing fibers 12 extend. The composite material supply unit 122 supplies the composite material 70 in a non-pressed state 130 where the composite material 70 is not pressed in the vertical direction, which is a direction orthogonal to the plane on which the reinforcing fibers 12 are arranged, that is, in the Z-axis direction.

As illustrated in FIG. 9, both of the compression roller 124 and the consolidation roller 126 are provided on the downstream side of the supply of the composite material 70 by the composite material supply unit 122 in parallel to the plane on which the reinforcing fibers 12 are arranged and along the Y-axis direction that is a direction intersecting the reinforcing fibers 12. In the fifth embodiment, the compression roller 124 rotates in the counterclockwise direction in FIG. 9 to convey the composite material 70 in the non-pressed state 130 supplied from the composite material supply unit 122 toward the +X direction of the X-axis direction on the downstream side while pressing the composite material 70 in the vertical direction such that the composite material 70 becomes a compressed state 132. In the fifth embodiment, the consolidation roller 126 rotates in the counterclockwise direction in FIG. 9 to convey the composite material 70 in the compressed state 132 conveyed from the compression roller 124 toward the +X direction of the X-axis direction on the downstream side while pressing the composite material 70 in the vertical direction such that the composite material 70 becomes a consolidated state 134. The compression roller 124 and the consolidation roller 126 constitute at least two electroconductive rollers arranged at a distance from each other in the X-axis direction as the direction in which the reinforcing fibers 12 extend. In the fifth embodiment, the electroconductive rollers have the two rollers, that is, the compression roller 124 and the consolidation roller 126, but the present invention is not limited thereto. Three or more electroconductive rollers may be provided to set three or more stages of the pressing state of the composite material 70.

For the electroconductive roller, for example, it is preferred to use metal material having electric conductivity, inorganic material having electric conductivity such as ceramics and carbon-based material, and organic material having electric conductivity. When the electric conductive material constituting the electroconductive roller is metal material having electric conductivity, that is, when the electroconductive roller is a metal roller, the metal material having electric conductivity is preferably a metal material having high electric conductivity. For the metal material having high electric conductivity, for example, it is preferred to use aluminum, iron, copper, silver, and gold.

In the composite material molding device 120 according to the fifth embodiment, the magnetic field coil 40 is provided in a region between the compression roller 124 and the consolidation roller 126, which constitute at least two electroconductive rollers, at a position opposed to the Z-axis direction as the vertical direction through the composite material 70 and the flat table 22. The magnetic field coil 40 applies the magnetic field 42 to the region between the compression roller 124 and the consolidation roller 126 in a direction intersecting the plane on which the reinforcing fibers 12 are arranged. Note that, in the fifth embodiment, the magnetic field coil 40 is provided in the region between the compression roller 124 and the consolidation roller 126, but the present invention is not limited thereto. The magnetic field coil 40 may be freely provided in a region between two electroconductive rollers constituting at least two electroconductive rollers.

The control unit 128 is electrically connected to the magnetic field coil 40, the composite material supply unit 122, a drive mechanism for the compression roller 124, and a drive mechanism for the consolidation roller 126. The control unit 128 has the same hardware as that of the control unit 50 according to the first embodiment, and controls the magnetic field coil 40 by the same method as that of the control unit 50 according to the first embodiment. The control unit 128 controls the composite material supply unit 122 to control the supply amount, supply speed, and number of supplied composite materials 70. By controlling the drive mechanism for the compression roller 124, the control unit 128 controls the magnitude of the pressurization in the vertical direction, that is, controls the pressure to control the compression processing of the composite material 70 and the conveyance speed of the composite material 70 in accordance with the rotational driving of the compression roller 124. By controlling the drive mechanism for the consolidation roller 126, the control unit 128 controls the magnitude of the pressurization in the vertical direction, that is, the consolidation processing of the composite material 70 and the conveyance speed of the composite material 70 in accordance with the rotational driving of the consolidation roller 126.

Actions of the composite material molding device 120 according to the fifth embodiment having the configurations described above are described below. A composite material molding method according to the fifth embodiment, which is a processing method executed by the composite material molding device 120 according to the fifth embodiment, is different from the composite material molding method according to the third embodiment in that the conductive wire-shaped material arrangement step S12 is changed as follows.

The conductive wire-shaped material arrangement step S12 according to the fifth embodiment is different from the conductive wire-shaped material arrangement step S12 according to the third embodiment in that the compression roller 124 and the consolidation roller 126 are pushed against the composite material 70 instead of pressing the predetermined region 78 of the composite material 70 by the pressing head 90 to push the conductive wire-shaped materials 96 against the predetermined region 78 of the composite material 70. Both of the compression roller 124 and the consolidation roller 126 pushed against the composite material 70 are made of electric conductive material and have electric conductivity, and hence have a conductive loop forming function similarly to the conductive wire-shaped material 96 according to the third embodiment. At the conductive wire-shaped material arrangement step S12 according to the fifth embodiment, when the composite material 70 is conveyed by the compression roller 124 and the consolidation roller 126, the pressed regions of the composite material 70 by the compression roller 124 and the consolidation roller 126 move in the -X direction of the X-axis direction on the opposite side of the conveyance direction of the composite material 70 at the same speed as the conveyance speed of the composite material 70.

The magnetic field application step S14 according to the fifth embodiment is obtained by changing, due to the change of the conductive wire-shaped material arrangement step S12 according to the fifth embodiment, the region applied with the magnetic field 42 to the region between the compression roller 124 and the consolidation roller 126 pushed against the composite material 70. At the magnetic field application step S14 according to the fifth embodiment, when the composite material 70 is conveyed by the compression roller 124 and the consolidation roller 126, the region in the composite material 70 in which the conductive loop is formed and the region in which the magnetic field 42 is applied move in the -X direction of the X-axis direction on the opposite side of the conveyance direction of the composite material 70 at the same speed as the conveyance speed of the composite material 70.

The composite material molding method according to the fifth embodiment further includes a composite material supply step and a composite material compression step and a composite material consolidation step. The composite material supply step is a step at which the composite material supply unit 122 supplies the composite material 70 having the reinforcing fibers 12 extending in one direction onto the flat table 22 along a +X direction as the X-axis direction, which is the direction in which the reinforcing fibers 12 extend.

The composite material compression step is a step at which the compression roller 124 is in a non-pressed state 130 supplied from the composite material supply unit 122, and the composite material 70 in the state before reaction of the resin 14 before the magnetic field is applied for heating at the magnetic field application step S14 is conveyed in the +X direction of the X-axis direction on the downstream side while pressing the composite material 70 in the vertical direction to be in a compressed state 132.

The composite material consolidation step is a step at which the consolidation roller 126 becomes a compressed state 132 by the compression roller 124, and the composite material 70 after reaction of the resin 14 after the magnetic field is applied for heating at the magnetic field application step S14 is conveyed in the X-axis direction on the downstream side while pressing the composite material 70 in the vertical direction to be in a consolidated state 134 in which the resin 14 of the composite material 70 that has been identifiable to be separated during supply from the composite material supply unit 122 is integrated so as to be unidentifiable to be separated.

The composite material molding device 120 and the composite material molding method by the composite material molding device 120 according to the fifth embodiment have the configurations described above, and hence, similarly to the third and fourth embodiments, even when the conductive wire-shaped materials 96 are not interwoven inside the composite material 70, a conductive loop is formed inside the composite material 70 through the compression roller 124 and the consolidation roller 126 served as electroconductive rollers. Thus, sufficient eddy current is induced inside the composite material 70 in response to the application of the magnetic field 42 to the conductive loop, and hence the occurrence of temperature unevenness in the composite material 70 during heating can be reduced.

In addition, in the composite material molding device 120 and the composite material molding method by the composite material molding device 120 according to the fifth embodiment, the composite material 70 is conveyed while being pressed by the compression roller 124 and the consolidation roller 126 served as electroconductive rollers, and hence the pressed region in the composite material 70 and the region in the composite material 70 in which the conductive loop is formed can be moved. Consequently, the elongated composite materials 70 in which the conductive wire-shaped materials 96 are not interwoven in the composite materials 70 can be sequentially molded as appropriate.

### Sixth embodiment

A composite material molding method according to a sixth embodiment is obtained by selecting, in each of the first to fifth embodiments, a commingled material that is the mixture of reinforcing fibers 12 and thermoplastic resin fibers served as the resin 14 as a composite material to be molded. The commingled material includes a commingled knitted material in which the reinforcing fibers 12 and the thermoplastic resin fibers are interwoven in a knitted manner. The composite material molding method and the commingled material as a composite material molded by the method according to the sixth embodiment have the configurations described above, and hence exhibit the same actions and effects as in the first to fifth embodiments.

### Reference Signs List

- 10, 60, 70: Composite material
- 12: Reinforcing fiber
- 14: Resin
- 16, 66, 96, 116: Conductive wire-shaped material
- 18, 78: Predetermined region
- 20, 80, 100, 120: Composite material molding device
- 22: Flat table
- 30, 90, 110: Pressing head
- 32, 92, 112: Pressing head main body
- 40: Magnetic field coil
- 42: Magnetic field
- 50, 128: Control unit
- 122: Composite material supply unit
- 124: Compression roller
- 126: Consolidation roller
- 130: Non-pressed state
- 132: Compressed state
- 134: Consolidated state
- d, d1, d2, D, D1, D2: Interval

## Claims

1. A method for molding a composite material including reinforcing fibers, the method comprising:
a conductive wire-shaped material arrangement step of arranging, in a pre-reaction composite material, a plurality of conductive wire-shaped materials along a direction intersecting the reinforcing fibers with intervals wider than intervals of the reinforcing fibers in a plane on which the reinforcing fibers are arranged; and
a magnetic field application step of applying a magnetic field in a direction intersecting the plane on which the reinforcing fibers are arranged.

2. The method for molding a composite material according to claim 1, wherein intervals of the conductive wire-shaped materials at peripheral regions of the composite material are larger than intervals of the conductive wire-shaped materials at a center region of the composite material.

3. The method for molding a composite material according to claim 1 or 2, wherein the conductive wire-shaped material arrangement step includes interweaving the conductive wire-shaped materials into the composite material.

4. The method for molding a composite material according to claim 1 or 2, wherein the conductive wire-shaped material arrangement step includes pressing the composite material by a pressing head to which the conductive wire-shaped materials are provided on a side to face the composite material.

5. The method for molding a composite material according to claim 1 or 2, wherein the conductive wire-shaped material arrangement step includes pressing the composite material by an electroconductive roller served as the conductive wire-shaped material, and conveying the composite material along a direction in which the reinforcing fibers extend.

6. The method for molding a composite material according to any one of claims 1 to 5, wherein the composite material is a commingled material in which the reinforcing fibers and a resin are interwoven in a knitted manner.

7. A composite material extending planarly, comprising:
reinforcing fibers;
a resin impregnated in the reinforcing fibers; and
a plurality of conductive wire-shaped materials disposed in a plane on which the reinforcing fibers are arranged, with intervals wider than intervals of the reinforcing fibers, along a direction intersecting the reinforcing fibers.

8. A composite material extending planarly, comprising:
reinforcing fibers;
a resin interwoven in a knitted manner together with the reinforcing fibers; and
a plurality of conductive wire-shaped materials disposed in a plane on which the reinforcing fibers are arranged along a direction intersecting the reinforcing fibers, with intervals wider than intervals of the reinforcing fibers.

9. A pressing head for pressing a composite material including reinforcing fibers, the pressing head comprising:
a pressing head main body; and
a plurality of conductive wire-shaped materials provided, on a side of the pressing head main body to face the composite material, in a planar direction in which the reinforcing fibers are arranged along a direction intersecting the reinforcing fibers, with intervals wider than intervals of the reinforcing fibers.

10. A device for molding a composite material, comprising:
the pressing head according to claim 9; and
a magnetic field coil for applying a magnetic field in a direction intersecting a plane on which the reinforcing fibers are arranged.

11. A device for molding a composite material, comprising:
a composite material supply unit that supplies a composite material including reinforcing fibers along a direction in which the reinforcing fibers extend;
at least two electroconductive rollers provided, on a downstream side of the composite material supplied by the composite material supply unit, in parallel to a plane on which the reinforcing fibers are arranged and along a direction intersecting the reinforcing fibers, the at least two electroconductive rollers being disposed at a distance from each other in the direction in which the reinforcing fibers extend; and
a magnetic field coil for applying a magnetic field to a region between the at least two electroconductive rollers in a direction intersecting the plane on which the reinforcing fibers are arranged, wherein
the electroconductive roller presses the composite material supplied by the composite material supply unit in a direction orthogonal to the plane on which the reinforcing fibers are arranged, and conveys the composite material along the direction in which the reinforcing fibers extend.
